(19) Europäisches Patentamt
European Patent Office
Office européen des brevets

(11) **EP 1 743 153 B1**

(12) **FASCICULE DE BREVET EUROPEEN**

(45) Date de publication et mention
de la délivrance du brevet:
**29.08.2012 Bulletin 2012/35**

(21) Numéro de dépôt: **05769925.8**

(22) Date de dépôt: **03.05.2005**

(51) Int Cl.:
*G01M 13/04* *(2006.01)*     *G01L 5/00* *(2006.01)*

(86) Numéro de dépôt international:
**PCT/FR2005/001107**

(87) Numéro de publication internationale:
**WO 2005/121732 (22.12.2005 Gazette 2005/51)**

(54) **PROCEDE ET SYSTEME DE DETERMINATION DE DEFORMATIONS AU MOYEN D"AU MOINS DEUX JAUGES**

VERFAHREN UND SYSTEM ZUR ERKENNUNG VON DEFORMATIONEN ANHAND VON MINDESTENS ZWEI MESSGERÄTEN

METHOD AND SYSTEM FOR DETERMINING DEFORMATIONS BY MEANS OF AT LEAST TWO GAUGES

(84) Etats contractants désignés:
**AT BE BG CH CY CZ DE DK EE ES FI FR GB GR HU IE IS IT LI LT LU MC NL PL PT RO SE SI SK TR**

(30) Priorité: **04.05.2004 FR 0404756**

(43) Date de publication de la demande:
**17.01.2007 Bulletin 2007/03**

(73) Titulaire: **S.N.R. ROULEMENTS**
**74000 Annecy (FR)**

(72) Inventeurs:
• **DURET, Christophe**
**F-74000 Annecy (FR)**

• **BLANCHIN, Olivier**
**F-74000 Annecy (FR)**

(74) Mandataire: **Novagraaf Technologies**
**122, rue Edouard Vaillant**
**92593 Levallois-Perret Cedex (FR)**

(56) Documents cités:
**EP-A- 1 221 589          DE-A1- 10 041 093**
**US-A- 4 203 319          US-A- 4 705 969**
**US-A1- 2002 062 694      US-A1- 2002 194 927**

**EP 1 743 153 B1**

**Description**

L'invention concerne un procédé de détermination de l'amplitude A des déformations pseudo sinusoïdales d'une zone d'un élément structurel ainsi qu'un système de détermination utilisant un tel procédé.

Dans de nombreuses applications, l'on souhaite connaître en temps réel et avec une qualité constante l'amplitude de déformations pseudo sinusoïdales d'une zone d'un élément structurel qui sont induites par des efforts subis par ledit élément. En particulier, cette connaissance peut être utile pour des raisons de sécurité vis-à-vis de la résistance dudit élément ou pour en déduire les efforts appliqués audit élément.

Pour ce faire, il est connu d'utiliser un montage en pont de Wheatstone qui nécessite d'utiliser des résistances parfaitement ajustées pour annuler l'offset du pont, de positionner précisément ces résistances sur la zone pour que l'une soit en compression pendant que l'autre est en tension, et de ne pas introduire de bruits de mesure supplémentaires. L'ensemble de ces contraintes étant difficilement rempli de façon industrielle, l'utilisation de ce type de montage conduit à des précisions de détermination qui ne sont généralement pas satisfaisantes.

Par ailleurs, l'on peut souhaiter également déterminer l'amplitude des déformations spatiales pseudo sinusoïdales d'une zone d'un élément structurel qui sont induites par des efforts dynamiques, notamment périodiques, subis par ledit élément.

En particulier, l'élément structurel peut être une partie d'un roulement qui est déformée spatialement et temporellement de façon pseudo sinusoïdale par le passage des corps roulants lors de la rotation dudit roulement. La détermination de l'amplitude des déformations permet en particulier, lorsqu'il s'agit d'un roulement de roue de véhicule automobile, de connaître les efforts qui s'appliquent à l'interface entre la roue et la chaussée sur laquelle ladite roue tourne.

L'un des problèmes qui se pose avec une telle stratégie de détermination des efforts est que le signal de déformation dépend de la vitesse de rotation. En particulier, la qualité de la mesure à faible vitesse est insuffisante et la détermination n'est disponible qu'après mesure des déformations induites par le passage d'au moins deux corps roulants successifs.

Par conséquent, ce problème est d'autant plus critique que la mesure d'efforts doit être réalisée en temps réel ou avec un minimum de retard, tel que cela est nécessaire pour les systèmes de contrôle de la dynamique du véhicule comme par exemple l'ABS ou l'ESP.

Dans le document EP 1 221 589 est décrit un dispositif, dont l'objectif est de déterminer la direction et la vitesse de rotation d'un organe tournant. Ce document enseigne notamment que la direction de rotation peut être déduite du déphasage mesuré entre deux signaux SIN et COS délivrés par deux jauges extensométriques placées à $\lambda/4$.

L'invention vise notamment à résoudre les problèmes mentionnés ci-dessus en proposant un procédé de détermination de l'amplitude de déformations pseudo sinusoïdales d'un élément structurel, ledit procédé prévoyant un échantillonnage spatial du signal de déformation et un traitement des signaux qui permette une détermination précise de façon particulièrement tolérante vis-à-vis des contraintes tant au niveau des éventuels défauts des signaux issus des jauges de mesure que du positionnement desdites jauges sur la zone déformée.

A cet effet, l'invention vise à tirer partie des signaux délivrés par quatre jauges de contraintes disposées sur une zone d'un élément structurel pour former deux signaux SIN et COS de même amplitude ladite amplitude étant fonction de l'amplitude des déformations pseudo sinusoïdales de ladite zone. Plus spécifiquement, et selon un premier aspect, l'invention propose un procédé de détermination de l'amplitude A des déformations pseudo sinusoïdales d'une zone d'un élément structurel, ledit procédé prévoyant :

- de disposer sur ladite zone quatre jauges (1) de contraintes, délivrant chacune un signal $V_i$ fonction de la déformation subie par ladite jauge, i variant de 1 à 4 ;
- de former quatre signaux $S_1 = V_1 - V_2$, $S_2 = V_3 - V_4$, $S_3 = V_1 - V_3$ et $S_4 = V_4 - V_2$ ;
- de former les signaux SIN = $S_1 - S_2$ et COS = $S_3 - S_4$ de même angle et de même amplitude, ladite amplitude étant fonction de A ; et
- de calculer l'expression $SIN^2 + COS^2$ de sorte à en déduire l'amplitude A.

Selon un deuxième aspect, l'invention propose un procédé de détermination de l'amplitude A des déformations pseudo sinusoïdales d'une zone d'un élément structurel, ledit procédé prévoyant :

- de disposer sur ladite zone quatre jauges (1) de contraintes, délivrant chacune un signal $V_i$ fonction de la déformation subie par ladite jauge, i variant de 1 à 4 ;
- de former les signaux $S_1 = V_1 - V_2$, $S_2 = V_3 - V_4$ et $S_3 = V_2 - V_3$ ;
- de former les signaux SIN = $S_1 - S_2$ et COS = $2S_3$ de même angle et de même amplitude, ladite amplitude étant fonction de A ; et
- de calculer l'expression $SIN^2 + COS^2$ de sorte à en déduire l'amplitude A.

Selon un troisième aspect, l'invention propose un système de détermination de l'amplitude A des déformations pseudo sinusoïdales d'une zone d'un élément structurel au moyen d'un selon l'un des aspects précédents de l'invention, ledit système comprenant quatre jauges de contraintes, un dispositif de mesure des signaux $V_i$ qui est apte à former les signaux $S_i$, SIN et COS, et un dispositif de calcul de l'expression $SIN^2 + COS^2$ qui est apte à en déduire l'amplitude A.

D'autres objets et avantages de l'invention apparaîtront au cours de la description qui suit, faite en référence aux dessins annexés, dans lesquels :

- la figure 1a est une représentation schématique d'une poutre positionnée sur deux appuis distincts, une force normale à la poutre étant appliquée sur la face supérieure de la poutre, entre les deux appuis ; la figure 1b est une représentation schématique de la déformation pseudo sinusoïdale de la poutre qui est induite sur la surface inférieure de la poutre par application de la force selon la figure 1a ;

- les figures 2a et 2b sont des représentations respectivement analogues aux figures 1a et 1b, trois forces normales à la poutre étant appliquées sur la face supérieure de la poutre, lesdites forces étant de même intensité et étant espacées de sorte à obtenir la déformation pseudo sinusoïdale le long de la poutre selon la figure 2b ;

- les figures 3 et 4 sont des représentations d'un positionnement de respectivement deux jauges de contrainte et quatre jauges de contrainte par rapport à la déformation de sorte à obtenir un déphasage de $\pi/2$ entre les signaux issus des jauges de contrainte ;

- la figure 5 est une représentation fonctionnelle d'un système de détermination selon l'invention ;

- la figure 6 est une représentation fonctionnelle d'une variante du système de détermination selon la figure 5 ;

- la figure 7 est une représentation fonctionnelle d'un mode de réalisation d'un système de détermination selon l'invention ;

- les figures 8 et 9 sont des représentations fonctionnelles d'une variante du système de détermination selon la figure 7.

L'invention concerne un procédé de détermination de l'amplitude A des déformations pseudo sinusoïdales d'une zone d'un élément structurel. Le procédé s'applique en particulier à tout élément structurel qui, en utilisation, est soumis à des efforts induisant une déformation spatiale pseudo sinusoïdale, ladite déformation devant être déterminée notamment pour en déduire les efforts.

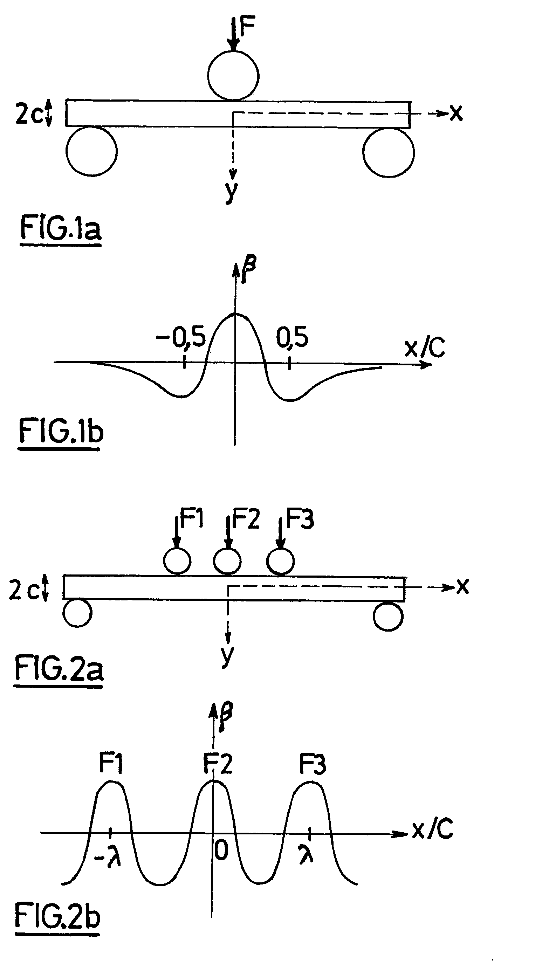

De façon générale, dans une pièce structurelle de type poutre qui est sollicitée par un effort F concentré, la distribution de la contrainte β, et donc la déformation de la poutre sur la zone à l'opposé de l'effort, a une allure de type sinusoïdale (ci-après pseudo sinusoïdale) sur une période spatiale (voir figures 1a et 1b). Et, dans le cas de plusieurs efforts F1, F2, F3 adjacents, les distributions de contraintes β s'additionnent de sorte à pouvoir former une distribution totale pseudo sinusoïdale sur trois périodes (voir figures 2a et 2b).

Dans un exemple particulier, l'élément structurel est la bague d'un roulement qui, du fait de la présence des corps roulants, est soumise, à l'opposé desdits corps roulants, à une déformation spatiale qui peut être approximée par une sinusoïde.

Dans la suite de la description, on parlera de déformations pseudo sinusoïdales pour désigner de telles déformations. La déformation pseudo sinusoïdale est caractérisée par une amplitude qui dépend des charges subies par le roulement et donc des efforts qui s'appliquent, et une période qui est donnée par l'écartement entre les corps roulants.

Par ailleurs, lors de la rotation du roulement, le passage des corps roulants dans le chemin de roulement induit une succession de compressions et de relaxations des bagues. Ainsi, lors de la rotation, les bagues sont soumises à une déformation périodique temporelle, en conservant une déformation spatiale pseudo sinusoïdale dont seule la phase varie temporellement. Dans le domaine du roulement, l'élément structurel peut également être l'armature d'un joint d'étanchéité qui, comme cela est décrit dans le document FR-2 736 979, se déforme spatialement de façon pseudo sinusoïdale lors de la rotation. L'invention permet, dans le cas où la distribution de contraintes subies par une zone d'une pièce structurelle induit des déformations spatiales qui peuvent être approximées par une sinusoïde, de mesurer l'amplitude par échantillonnage spatiale de cette sinusoïde de sorte à pouvoir notamment en déduire les efforts subis.

Par ailleurs, dans le cas où les efforts appliqués sont dynamiques, l'échantillonnage spatiale de la déformation pseudo sinusoïdale permet également de déterminer l'amplitude de la déformation.

Le procédé prévoit de disposer sur ladite zone quatre jauges 1 de contrainte, délivrant chacune un signal $V_i$ fonction de la déformation subie par ladite jauge. Pour ce faire, l'invention prévoit un système de détermination qui comprend lesdites jauges.

Par ailleurs, le système comprend un dispositif de mesure 2 des signaux $V_i$, ledit dispositif de mesure étant apte à former :

- en fonction respectivement des variations d'au moins un signal $V_i$, au moins deux signaux $S_i$ ; et
- à partir des signaux $S_i$, deux signaux SIN et COS de même angle et de même amplitude, ladite amplitude étant fonction de A.

Le système comprend en outre un dispositif de calcul 3, par exemple sous la forme d'un calculateur, qui est apte à calculer l'expression $SIN^2 + COS^2$ de sorte à en déduire l'amplitude A.

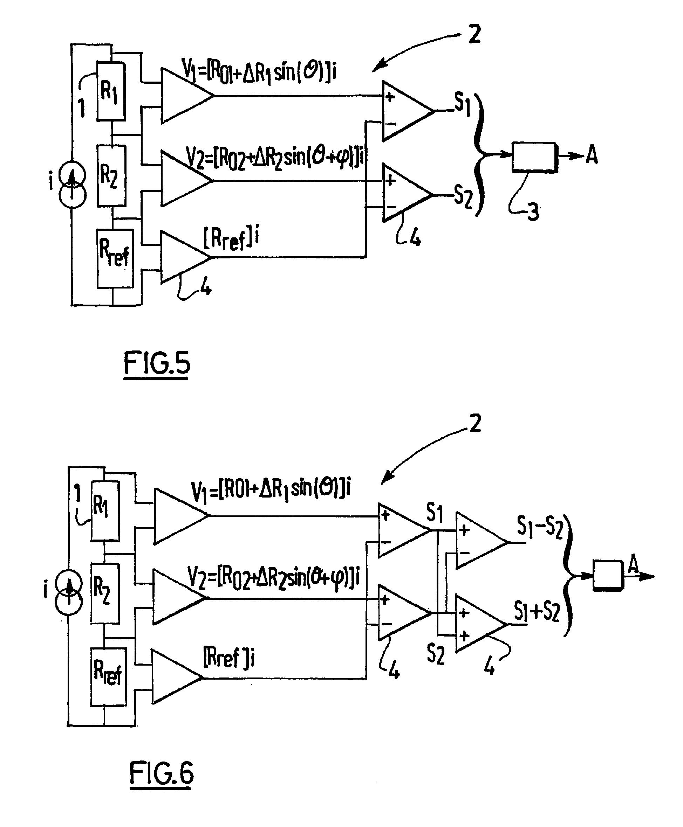

En relation avec les figures 5 à 9 on décrit des modes de réalisation d'un système de détermination, dans lequel les jauges 1 sont à base d'éléments résistifs, notamment piézorésistifs ou magnétostrictifs, de sorte à présenter chacune une résistance électrique $R_i$ qui varie en fonction des déformations subies par ladite jauge. En particulier, les jauges 1 peuvent comprendre soit un bloc de plusieurs résistances qui sont combinées pour obtenir une valeur de résistance moyennée qui est représentative de la valeur de la résistance au niveau de la position du bloc, soit une seule résistance.

Selon ces modes de réalisation, les résistances sont intégrées dans un montage en boucle de courant de sorte que les signaux de variation des résistances soient égaux à :

$V_i = [R_{0i} + \Delta R_i sin(\theta+(i-1)\varphi)]i$, $R_{0i}$ étant la valeur au repos de la résistance $R_i$, $\varphi$ le déphasage spatial entre les jauges 1, i le courant dans la boucle.

Dans le cas statique, l'angle $\theta$ est l'angle de la sinusoïde telle que représentée sur les figures 1b et 2b. Dans le cas d'une déformation dynamique, l'angle $\theta$ est égal par exemple à $\omega t$, avec $\omega=2\pi/T$ (T étant la période temporelle de la sinusoïde).

Dans ce dernier cas, on s'affranchit notamment des problèmes de retard ou de qualité qui sont inhérents à une détermination temporelle des déformations.

Le dispositif de mesure 2 peut comprendre en outre un étage de filtrage des signaux non représenté.

Le système de détermination illustré sur les figures 5 et 6, pour lequel aucune protection n'est ici recherchée, comprend deux jauges 1 et un montage en boucle de courant entre lesdites jauges et une résistance de référence $R_{ref}$ dont la valeur est fixe en fonction des déformations subies par la zone. Le signal aux bornes de la résistance $R_{ref}$ est alors égal à $R_{ref}i$.

Le montage comprend en outre un étage d'amplificateurs différentiels 4 qui sont agencés de sorte à obtenir des signaux $S_i$. L'étage d'amplificateurs 4 combine les signaux $V_i$ de sorte à obtenir :

$$S_1 = [(R_{01} - R_{ref}) + \Delta R_1 sin\theta]i ;$$

$$S_2 = [(R_{02} - R_{ref}) + \Delta R_2 sin(\theta+\varphi)]i.$$

Dans le cas où $R_{01} = R_{02} = R_{ref}$, nous avons les signaux suivants :

$$S_1 = [\Delta R_1 sin\theta]i ;$$

$$S_2 = [\Delta R_2 sin(\theta+\varphi)]i$$

qui sont centrés sur zéro par la soustraction du signal de référence $R_{ref}i$.

Par ailleurs, les résistances $R_i$ peuvent être agencées de sorte que $\Delta R_1 = \Delta R_2 = \Delta R$. En variante, on peut prévoir qu'au moins un amplificateur différentiel 4 présente un gain ajustable de sorte à égaliser les deux amplitudes mentionnées ci-dessus. Ainsi, les signaux s'écrivent :

$$S_1 = [\Delta R sin\theta]i ;$$

$$S_2 = [\Delta R \sin(\theta + \varphi)]i.$$

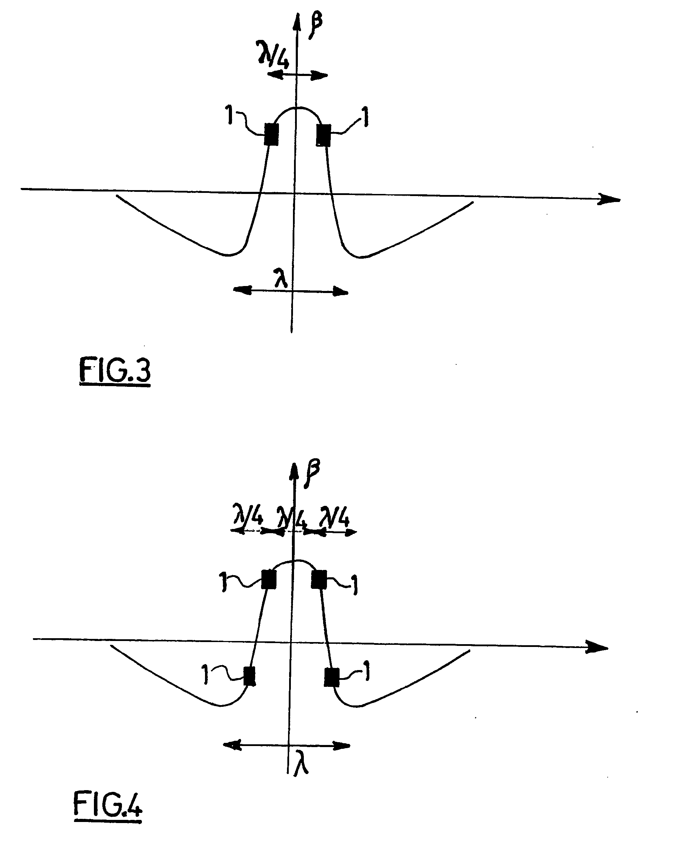

Dans le cas particulier où les jauges sont disposées de sorte que $\varphi = \pi/2$, c'est-à-dire la distance entre les jauges 1 est égale à $\lambda/4$ ($\lambda$ étant la période de la sinusoïde, voir figure 3), les signaux s'écrivent :

$$S_1 = [\Delta R \sin\theta]i \; ;$$

$$S_2 = [\Delta R \cos\theta]i.$$

Par conséquent, dans ce cas particulier, le système de détermination représenté sur la figure 1 permet d'obtenir directement des signaux COS = $S_2$ et SIN = $S_1$

Ainsi, en calculant l'expression $SIN^2 + COS^2$ on obtient $\Delta R^2$, ce qui permet, en sortie du dispositif de calcul 3, d'obtenir l'amplitude A qui est fonction de $\Delta R$.

En relation avec la figure 6, on décrit un système de détermination qui permet d'obtenir des signaux SIN et COS quelle que soit la valeur du déphasage spatial $\varphi$ entre les jauges 1.

Pour ce faire, le dispositif de mesure comprend un deuxième étage à deux amplificateurs différentiels 4 de sorte à délivrer les signaux $S_1 - S_2$ et $S_1 + S_2$.

En effet, ces expressions s'écrivent :

$$S_1 - S_2 = [-2G\Delta R \sin(\frac{\varphi}{2}) \times \cos(\theta + \frac{\varphi}{2})]i \; ;$$

et

$$S_1 + S_2 = [2G\Delta R \cos(\frac{\varphi}{2}) \times \sin(\theta + \frac{\varphi}{2})]i .$$

Nous avons donc $S_1 + S_2 = $ SIN et $S_1 - S_2 = $ COS, de sorte que, comme exposé ci-dessus, nous pouvons obtenir l'amplitude A qui est fonction de $\Delta R$ en calculant l'expression $SIN^2 + COS^2$ dans le dispositif de calcul 3.

Notons que dans le cas où $\varphi$ est différent de $\pi/2$, l'amplitude des signaux $(S_1 - S_2)$ et $(S_1 + S_2)$ est différente. Pour égaliser ces amplitudes, on peut prévoir qu'au moins un amplificateur différentiel 4 du deuxième étage présente un gain ajustable. En particulier, le gain de l'amplificateur formant le signal COS peut être ajusté à $\cos(\frac{\varphi}{2})/\sin(\frac{\varphi}{2})$.

Selon le mode de réalisation de l'invention, illustré par lesfigures 7 à 9, le système de détermination comprend quatre jauges 1 et un montage en boucle de courant entre lesdites jauges. Le montage comprend en outre quatre amplificateurs différentiels 4 à gains réglables $G_i$.

Le dispositif de mesure 2 délivre donc en sortie des amplificateurs 4, les signaux :

$$V_1 = G_1 \times (R_{01} + \Delta R_1 \sin\theta)i$$

$$V_2 = G_2 \times (R_{02} + \Delta R_2 \sin(\theta + \varphi))i$$

$$V_3 = G_3 \times (R_{03} + \Delta R_3 \sin(\theta + 2\varphi))i$$

$$V_4 = G_4 \times (R_{04} + \Delta R_4 \sin(\theta + 3\varphi))i$$

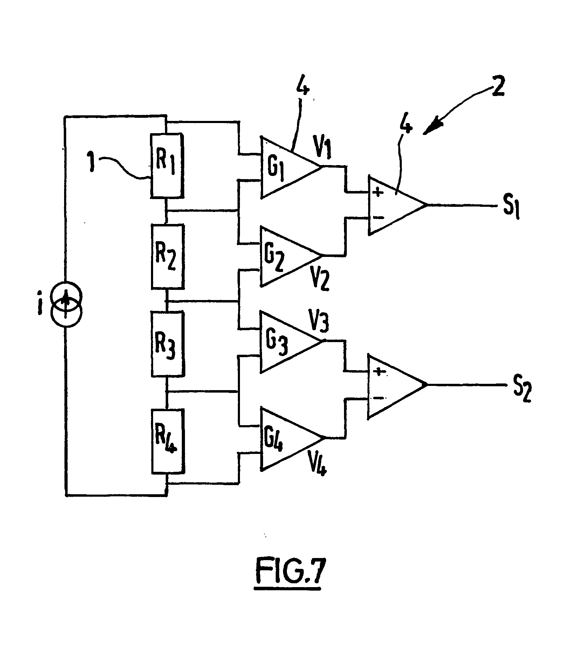

Selon la réalisation représentée sur la figure 7, le dispositif de mesure 2 comprend en outre un étage d'amplificateurs différentiels 4 agencés pour faire les différences.

$$S_1 = V_1 - V_2 = \left[(G_1 R_{01} - G_2 R_{02}) + G_1 \Delta R_1 \sin\theta - G_2 \Delta R_2 \sin(\theta + \varphi)\right] \times i \ \textbf{(1)}$$

$$S_2 = V_3 - V_4 = \left[(G_3 R_{03} - G_4 R_{04}) + G_3 \Delta R_3 \sin(\theta + 2\varphi) - G_4 \Delta R_4 \sin(\theta + 3\varphi)\right] \times i \ \textbf{(2)}$$

En ajustant les gains $G_i$ de sorte que : $G_1 = G_2 = G_3 = G_4 = G$, en fixant les valeurs au repos des résistances de sorte que : $R_{01} = R_{02} = R_{03} = R_{04}$ , et en supposant que $\Delta R_1 = \Delta R_2 = \Delta R_3 = \Delta R_4 = \Delta R$, les différences (1) et (2) deviennent :

$$S_1 = \left[G\Delta R[\sin\theta - \sin(\theta + \varphi)]\right] \times i \ \textbf{(3)}$$

$$S_2 = \left[G\Delta R[\sin(\theta + 2\varphi) - \sin(\theta + 3\varphi)]\right] \times i \ \textbf{(4)}$$

En particulier, l'égalité des $\Delta R_i$ peut être obtenue dans le cas où les jauges 1 sont équidistantes de la zone d'application de l'effort. En variante, des signaux $S_i$ de même amplitude et centrés sur zéro peuvent être obtenus en ajustant les valeurs des résistances au repos et les gains de sorte que $G_1 R_{01} = G_2 R_{02} = G_3 R_{03} = G_4 R_{04}$ et que $G_1 \Delta R_1 = G_2 \Delta R_2 = G_3 \Delta R_3 = G_4 \Delta R_4 = G\Delta R$. En outre, l'ajustement des $R_{0i}$ et le réglage des gains $G_i$ permettent de compenser les défauts de forme de la pseudo sinusoïde.

Dans le cas particulier où les jauges 1 sont disposées sur la zone de sorte que $\varphi = \pi/2$, c'est-à-dire la distance entre les jauges 1 est égale à $\lambda/4$ (voir figure 4), les différences (3) et (4) s'écrivent :

$$S_1 = \left[\sqrt{2}G\Delta R\cos(\theta + \pi/4)\right] \times i$$

$$S_2 = \left[\sqrt{2}G\Delta R\sin(\theta + \pi/4)\right] \times i$$

Par conséquent, dans ce cas particulier, le dispositif de mesure 2 représenté sur la figure 3 permet d'obtenir directement des signaux COS = $S_1$ et SIN = $S_2$.

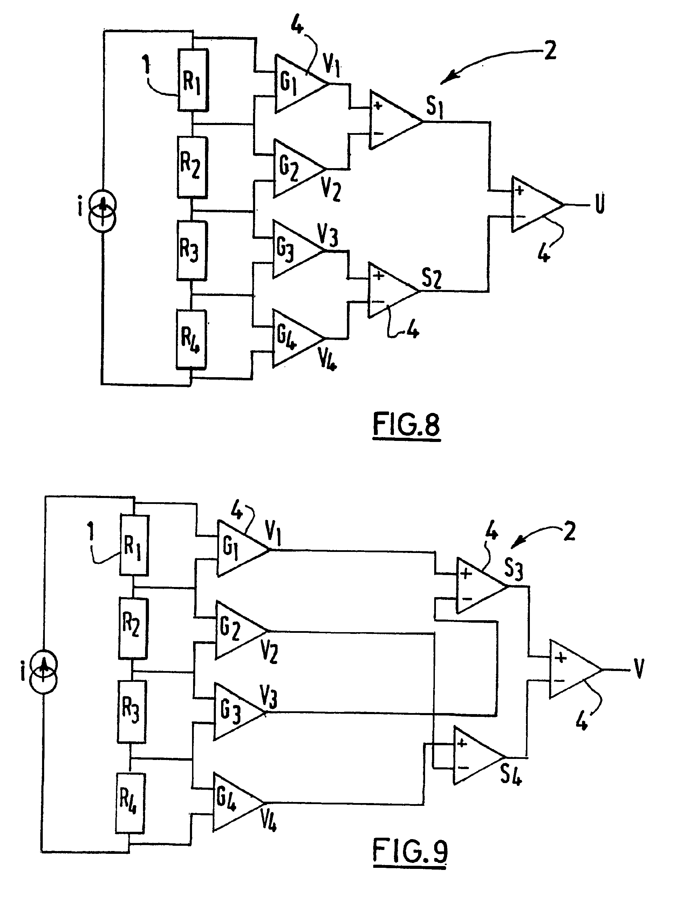

Ainsi, en calculant l'expression $SIN^2 + COS^2$ on obtient $\left[\sqrt{2}G\Delta R\right] \times i^2$ , , ce qui permet, en sortie du dispositif de calcul 3 (non représenté sur la figure 3), d'obtenir l'amplitude A qui est fonction de $\Delta R$. En relation avec les figures 8 et 9, on décrit un dispositif de mesure 2 qui permet d'obtenir des signaux SIN et COS quelle que soit la valeur du déphasage spatial $\varphi$ entre les jauges 1.

Pour ce faire, le dispositif de mesure 2 comprend deux étages d'amplificateurs différentiels 4, le premier étage étant analogue à celui de la figure 7, et est donc agencé pour délivrer les signaux $S_1$ et $S_2$ selon les relations (3) et (4) mentionnées ci-dessus, mais également de façon analogue les signaux $S_3 = V_1 - V_3$ et $S_4 = V_4 - V_2$ (voir figure 9).

Le deuxième étage comprend deux amplificateurs différentiels 4 représentés respectivement sur les figures 8 et 9 par souci de clarté, de sorte à délivrer les signaux :

$$U = [S_1 - S_2] \;;$$

et

$$V = [S_3 - S_4]$$

Soit à partir des relations (3) et (4) :

$$U = [-4G\Delta R \sin(\varphi) \times \sin(\frac{\varphi}{2}) \times \sin(\theta + \frac{3\varphi}{2})]i$$

$$V = [-4G\Delta R \sin(\varphi) \times \cos(\frac{\varphi}{2}) \times \cos(\theta + \frac{3\varphi}{2})]i$$

Nous avons donc U = SIN et V = COS, de sorte que, comme exposé ci-dessus, nous pouvons obtenir l'amplitude A qui est fonction de $\Delta R$ en calculant l'expression $SIN^2 + COS^2$ dans le dispositif de calcul 3 (non représenté sur les figures 8 et 9).

Notons que dans le cas où $\varphi$ est différent de $\pi/2$, l'amplitude des signaux U et V est différente. Pour égaliser ces amplitudes, on peut prévoir qu'au moins un amplificateur différentiel 4 du deuxième étage présente un gain ajustable.

En particulier, le gain de l'amplificateur 4 formant le signal U peut être ajusté à $\cos(\frac{\varphi}{2})/\sin(\frac{\varphi}{2})$.

En variante du mode de réalisation représenté sur les figures 8 et 9, le deuxième étage du dispositif de mesure 2 comprend un amplificateur 4 conformément à la figure 8 et un deuxième amplificateur 4 agencé pour délivrer le signal $S_3 = V_2 - V_3$. Ainsi, les signaux délivrés par le dispositif de mesure 2 sont :

$$U = [S_1 - S_2] \;;$$

et

$$V = 2S_3$$

Cette variante est particulièrement adaptée pour le cas où l'amplitude des signaux $V_i$ ne peut pas être considérée comme identique, c'est-à-dire que les jauges 1 ne détectent pas une sinusoïde de même amplitude A. En effet, en supposant une distribution de charge linéaire entre les quatre jauges 1, les signaux $V_i$ s'écrivent :

$$V_1 = (G_1 R_{01} + (A + 3a)\sin\theta)i$$

$$V_2 = (G_2 R_{02} + (A + a)\sin(\theta + \varphi))i$$

$$V_3 = (G_3 R_{03} + (A - a)\sin(\theta + 2\varphi))i$$

$$V_4 = (G_4 R_{04} + (A - 3a)\sin(\theta + 3\varphi))i$$

a étant la variation linéaire de l'amplitude A à mesurer.

En supposant que $\varphi = \pi/2$ pour simplifier les calculs, bien que la solution selon cette variante soit également applicable à une valeur de $\varphi$ quelconque, on obtient :

$$U = [2\sqrt{2}(-A\sin(\theta + \frac{3\pi}{4}) + a\sin(\theta + \frac{\pi}{4}))]i$$

$$V = [-2\sqrt{2}(A\cos(\theta + \frac{3\pi}{4}) + a\cos(\theta + \frac{\pi}{4}))]i$$

Nous avons donc U = SIN et V = COS et la racine carrée de l'expression SIN$^2$ + COS$^2$ est égale à

$$2\sqrt{2}A\sqrt{1 + \frac{a^2}{A^2}} \times i.$$

Par conséquent, un développement limité au premier ordre (a«A) nous donne $2\sqrt{2}A \times i$ et donc l'amplitude A qui est celle induite au centre de la zone de répartition des jauges 1.

Dans le système de détermination, les jauges 1 peuvent être disposées sur un substrat qui est fixé sur la zone de déformation. Le substrat est rigidement fixé à la zone, par exemple par collage ou soudage, de sorte qu'il a également pour fonction de transmettre les déformations entre la zone et les jauges 1. Les jauges 1 sont placées à équidistance dans la direction générale de propagation des déformations (voir figures 3 et 4).

Bien que les jauges 1 décrites ci-dessus soient à base d'éléments résistifs, d'autres jauges 1, par exemple des capteurs choisis parmi les capteurs à ondes acoustiques de surface et les capteurs de champ magnétique, peuvent être utilisées dans le cadre de l'invention à condition qu'elles délivrent un signal fonction d'une déformation. En particulier, les capteurs de champ magnétique peuvent être basés sur des éléments sensibles de type magnétorésistance, magnétorésistance géante, effet Hall, magnétorésistance à effet tunnel, couches magnétostrictives.

Les jauges 1 peuvent être sérigraphiées en couche épaisse sur le substrat, par exemple en céramique. En particulier, une technologie de type circuit hybride permet d'intégrer le dispositif de mesure 2 et le dispositif de calcul 3 sur le substrat. En outre, la sérigraphie permet un bon ajustage de la valeur des résistances ainsi qu'une bonne sensibilité aux déformations, tout en assurant un positionnement précis des résistances sur le substrat.

Concernant la résistance de référence $R_{ref}$ mentionnée ci-dessus, elle peut être sérigraphiée sur une zone non sollicitée du substrat ou être insensible à la contrainte, par exemple formée d'un composant discret, de sorte à présenter une valeur fixe en fonction des déformations subies par la zone tout en présentant la même dérive en température que les résistances $R_i$.

Parmi les avantages de l'utilisation d'un procédé selon l'invention on peut citer :

- un filtrage naturel de certaines fréquences parasites, stationnaires ou transitoires, par la réalisation de différences entre les signaux $V_i$ ;
- une compensation de la forme de la déformation ou de la position géométrique des jauges sur la zone par un ajustage des gains, et donc offrir plus de liberté sur le positionnement desdites jauges sur la zone ;
- une meilleure compensation des dérives thermiques ;
- une faible consommation électrique du système de détermination.

## Revendications

1. Procédé de détermination de l'amplitude A des déformations pseudo sinusoïdales d'une zone d'un élément structurel, ledit procédé prévoyant :

   - de disposer sur ladite zone quatre jauges (1) de contraintes, délivrant chacune un signal $V_i$ fonction de la déformation subie par ladite jauge, i variant de 1 à 4 ;
   - de former quatre signaux $S_1 = V_1 - V_2$, $S_2 = V_3 - V_4$, $S_3 = V_1 - V_3$ et $S_4 = V_4 - V_2$, ;
   - de former les signaux SIN = Si - $S_2$ et COS = $S_3$ - $S_4$ de même angle et de même amplitude, ladite amplitude étant fonction de A ; et
- de calculer l'expression SIN$^2$ + COS$^2$ de sorte à en déduire l'amplitude A

**2.** Procédé de détermination de l'amplitude A des déformations pseudo sinusoïdales d'une zone d'un élément structurel, ledit procédé prévoyant :

- de disposer sur ladite zone quatre jauges (1) de contraintes, délivrant chacune un signal $V_i$ fonction de la déformation subie par ladite jauge, i variant de 1 à 4 ;
- de former les signaux $S_1 = V_1 - V_2$, $S_2 = V_3 - V_4$ et $S_3 = V_2 - V_3$ ;
- de former les signaux SIN = $S_1 - S_2$ et COS = $2S_3$ de même angle et de même amplitude, ladite amplitude étant fonction de A ; et
- de calculer l'expression SIN$^2$ + COS$^2$ de sorte à en déduire l'amplitude A.

**3.** Procédé selon la revendication 1 ou la revendication 2, **caractérisé en ce qu'**on dispose les quatre jauges (1) de sorte que les signaux $V_i$ soient déphasés de $\pi/2$.

**4.** Procédé selon l'une quelconque des revendications précédents, **caractérisé en ce que** les jauges (1) de contrainte sont prévues pour délivrer un signal au repos qui est tel que les signaux $S_i$ soient centrés sur zéro.

**5.** Système de détermination de l'amplitude A des déformations pseudo sinusoïdales d'une zone d'un élément structurel au moyen du procédé selon l'une quelconque des revendications 1 à 4, ledit système comprenant quatre jauges de contraintes (1), un dispositif de mesure (2) des signaux $V_i$ qui est apte à former les signaux $S_i$, SIN et COS, et un dispositif de calcul (3) de l'expression SIN$^2$ + COS$^2$ qui est apte à en déduire l'amplitude A.

**6.** Système selon la revendication 5, dans lequel les jauges (1) sont à base d'éléments résistifs de sorte à présenter chacune une résistance électrique $R_i$ qui varie en fonction des déformations subies par ladite jauge.

**7.** Système selon la revendication 6, **caractérisé en ce que** le dispositif de mesure (2) comprend un montage en boucle de courant entre les jauges (1) ledit montage comprenant au moins un étage d'amplificateurs différentiels (4) agencés de sorte à obtenir les signaux $S_i$, SIN et COS.

**8.** Système selon la revendication 7, **caractérisé en ce qu'**au moins un amplificateur différentiel (4) présente un gain ajustable.

**9.** Système selon la revendication 5, **caractérisé en ce que** les jauges (1) sont ou comprennent des capteurs choisis parmi les capteurs à ondes acoustiques de surface et les capteurs magnétiques.

**10.** Système selon l'une quelconque des revendications 5 à 9, **caractérisé en ce que** les jauges (1) sont disposées sur un substrat.

**11.** Système selon la revendication 10, **caractérisé en ce que** les jauges (1) sont sérigraphiées en couche épaisse sur le substrat.

**12.** Système selon la revendication 10 ou 11, **caractérisé en ce que** le dispositif de mesure (2) et le dispositif de calcul (3) sont intégrés sur le substrat.

**Claims**

**1.** Method for determining an amplitude A of pseudo-sinusoidal deformations of an area of a structural element, said method involving:

- arranging, on said area, four strain gauges (1), each of which delivers a signal $V_i$ as a function of the deformation to which said gauge is subjected, where i varies from 1 to 4;
- forming four signals $S_1 - V_1 - V_2$, $S_2 = V_3 - V_4$, $S_3 = V_1 - V_3$ and $S_4 = V_4 - V_2$;
- forming the signals SIN = $S_1 - S_2$ and COS = $S_3 - S_4$ having same angle and same amplitude, said amplitude being a function of A; and
- computing the expression SIN$^2$ + COS$^2$ so as to deduce the amplitude A.

**2.** Method for determining an amplitude A of pseudo-sinusoidal deformations of an area of a structural element, said method involving:

- arranging, on said area, four strain gauges (1), each of which delivers a signal $V_i$ as a function of the deformation to which said gauge is subjected, where i varies from 1 to 4;
- forming the signals $S_1 = V_1 - V_2$, $S_2 = V_3 - V_4$ and $S_3 = V_2 - V_3$;
- forming the signals $SIN = S_1 - S_2$ and $COS = 2S_3$ having same angle and same amplitude, said amplitude being a function of A; and
- computing the expression $SIN^2 + COS^2$ so as to deduce the amplitude A.

**3.** Method according to claim 1 or claim 2, characterised said method involving arranging the four gauges (1) so that the signals $V_i$ are out-of-phase by n/2.

**4.** Method according to any of the preceding claims, **characterised in that** the strain gauges (1) are provided to deliver an idle signal such that the signals $S_i$ are centred on zero.

**5.** System for determining an amplitude A of pseudo-sinusoidal deformations of an area of a structural element by means of the method according to any of claims 1 to 4, said system comprising four strain gauges (1), a device (2) for measuring the signals $V_i$ which is suitable for forming the signals $S_i$, SIN and COS, and a device (3) for computing the expression $SIN^2 + COS^2$ which is suitable for deducing the amplitude A.

**6.** System according to claim 5, wherein the gauges (1) comprise resistive elements such that each of the gauges has an electric resistance $R_i$ varying as a function of the deformations to which said gauge is subjected.

**7.** System according to claim 6, **characterised in that** the measuring device (2) comprises a current loop assembly between the gauges (1), said assembly comprising at least one differential amplifier stage (4) arranged so as to obtain the signals $S_i$, SIN and COS.

**8.** System according to claim 7, **characterised in that** at least one differential amplifier (4) has an adjustable gain.

**9.** System according to claim 5, **characterised in that** the gauges (1) are or comprise sensors selected from surface acoustic wave sensors and magnetic sensors.

**10.** System according to any of claims 5 to 9, **characterised in that** the gauges (1) are disposed on a substrate.

**11.** System according to claim 10, **characterised in that** the gauges (1) are screen-printed in a thick layer on the substrate.

**12.** System according to claim 10 or 11, **characterised in that** the measuring device (2) and the computing device (3) are integrated on the substrate.

**Patentansprüche**

**1.** Verfahren zur Bestimmung der Amplitude A der pseudosinusoidalen Verformungen eines Bereichs eines strukturellen Elements, wobei das besagte Verfahren Folgendes vorsieht:

- Anbringung auf dem besagten Bereich von vier Dehnungsmessstreifen (1), die jeweils ein Signal $V_i$ als Funktion der Verformung aussenden, der der besagte Messstreifen unterzogen wurde, wobei i von 1 bis 4 variiert;
- Bildung von 4 Signalen $S_1 = V_1 - V_2$, $S_2 = V_3 - V_4$, $S_3 = V_1 - V_3$ et $S_4 = V_4 - V_2$
- Bildung der Signale $SIN = S_1 - S_2$ und $COS = S_3 - S_4$ mit dem gleichen Winkel und der gleichen Amplitude, wobei die besagte Amplitude eine Funktion von A ist; und
- Berechnung des Ausdrucks $SIN^2 + COS^2$, um die Amplitude A davon abzuleiten.

**2.** Verfahren zur Bestimmung der Amplitude A der pseudosinusoidalen Verformungen eines Bereichs eines strukturellen Elements, wobei das besagte Verfahren Folgendes vorsieht:

- Anbringung auf dem besagten Bereich von vier Dehnungsmessstreifen (1), die jeweils ein Signal $V_i$ als Funktion

der Verformung aussenden, der der besagte Messstreifen unterzogen wurde, wobei i von 1 bis 4 variiert.
- Bildung der Signale $S_1 = V_1 - V_2$, $S_2 = V_3 - V_4$ und $S_3 = V_2 - V_3$;
- Bildung der Signale SIN = $S_1 - S_2$ et COS = $2S_3$ mit dem gleichen Winkel und der gleichen Amplitude, wobei die besagte Amplitude eine Funktion von A ist; und
- Berechnung des Ausdrucks $SIN^2 + COS^2$, um die Amplitude A davon abzuleiten.

3. Verfahren nach Anspruch 1 oder Anspruch 2, **dadurch gekennzeichnet, dass** die vier Messstreifen (1) so angebracht werden, dass die Signale $V_i$ um n/2 phasenverschoben sind.

4. Verfahren nach einem der vorhergehenden Ansprüche, **dadurch gekennzeichnet, dass** die vier Spannungsmessstreifen (1) dazu vorgesehen sind, ein Leerlaufsignal auszusenden, das derart ist, dass die Signale $S_i$ auf null zentriert sind.

5. System zu Bestimmung der Amplitude A der pseudosinusoidalen Verformungen eines Bereichs eines strukturellen Elements mit Hilfe des Verfahrens nach einem der Ansprüche 1 bis 4, wobei das besagte System vier Dehnungsmessstreifen (1), eine Vorrichtung zur Messung (2) der Signale $V_i$, die in der Lage ist, die Signale $S_i$, SIN und COS zu bilden, und eine Vorrichtung zur Berechnung (3) des Ausdrucks $SIN^2 + COS^2$, die dazu in der Lage ist, die Amplitude A davon abzuleiten, umfasst.

6. System nach Anspruch 5, wobei die Messstreifen (1) auf der Grundlage von Widerstandselementen hergestellt sind, um jeweils eine elektrische Resistenz $R_i$ aufzuweisen, die je nach den Verformungen variiert, denen der besagten Messstreifen unterzogen wurde.

7. System nach Anspruch 6, **dadurch gekennzeichnet, dass** die Vorrichtung zur Messung (2) eine Stromschleifenanordnung zwischen den Messstreifen (1) umfasst, wobei die besagte Anordnung mindestens eine Stufe von Differenzialverstärkern (4) umfasst, die so angeordnet sind, dass sie die Signale $S_i$, SIN und COS erhalten.

8. System nach Anspruch 7, **dadurch gekennzeichnet, dass** mindestens ein Differenzialverstärker (4) eine einstellbare Verstärkung umfasst.

9. System nach Anspruch 5, **dadurch gekennzeichnet, dass** die Messstreifen (1) Sensoren sind oder umfassen, ausgewählt aus den akustischen Oberflächenwellen-Sensoren und den magnetischen Sensoren.

10. System nach einem der Ansprüche 5 bis 9, **dadurch gekennzeichnet, dass** die Messstreifen (1) auf einem Substrat angeordnet sind.

11. System nach Anspruch 10, **dadurch gekennzeichnet, dass** die Messstreifen (1) in einer dicken Schicht auf dem Substrat serigraphiert sind.

12. System nach Anspruch 10 oder 11, **dadurch gekennzeichnet, dass** die Vorrichtung zur Messung (2) und die Vorrichtung zur Berechnung (3) auf dem Substrat integriert sind.

F

2c

x

y

FIG.1a

$\beta$

−0,5    0,5    x/C

FIG.1b

F1   F2   F3

2c

x

y

FIG.2a

$\beta$

F1   F2   F3

−λ    0    λ    x/C

FIG.2b

FIG.3

FIG.4

$$V_1 = [R_{01} + \Delta R_1 \sin(\theta)]i$$

$$V_2 = [R_{02} + \Delta R_2 \sin(\theta + \varphi)]i$$

$$[R_{ref}]i$$

S1

S2

A

## FIG.5

$$V_1 = [R_{01} + \Delta R_1 \sin(\theta)]i$$

$$V_2 = [R_{02} + \Delta R_2 \sin(\theta + \varphi)]i$$

$$[R_{ref}]i$$

S1

S2

S1−S2

S1+S2

A

## FIG.6

<u>FIG.7</u>

EP 1 743 153 B1

FIG.8

FIG.9

16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1221589 A

- FR 2736979